(19) Europäisches Patentamt
European Patent Office
Office européen des brevets

(11) **EP 4 366 233 A1**

(12) **EUROPEAN PATENT APPLICATION**

(43) Date of publication:
**08.05.2024 Bulletin 2024/19**

(21) Application number: **22205504.8**

(22) Date of filing: **04.11.2022**

(51) International Patent Classification (IPC):
***H04L 9/40*** (2022.01)

(52) Cooperative Patent Classification (CPC):
**H04L 63/1425; H04L 63/1416; H04L 63/145;
H04L 63/1458; H04L 63/1466**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **British Telecommunications public
limited company
London E1 8EE (GB)**

(72) Inventors:
• **BEARD, Alfie
London, E1 8EE (GB)**

• **CHEN, Liming
London, E1 8EE (GB)**
• **CHOUHAN, Pushpinder
London, E1 8EE (GB)**
• **LANIGAN, Bronah
London, E1 8EE (GB)**

(74) Representative: **British Telecommunications
public limited company
Intellectual Property Department
9th Floor
One Braham
Braham Street
London E1 8EE (GB)**

(54) **VERIFICATION METHOD FOR INTRUSION RESPONSE SYSTEM**

(57)     An intrusion response system is disclosed comprising an action verification module. The action verification module is configured to receive an identifier associated with at least one proposed mitigating action to perform in response to a detected cyber intrusion and details of the detected cyber intrusion, identify one or more verification tests to be performed, perform each of the one or more verification tests to obtain a respective one or more verification outcomes, calculate a verification score associated with the at least one proposed mitigating action based on the respective one or more verification outcomes, and determine whether the verification score exceeds a predetermined threshold value. Also disclosed is a corresponding method of verifying a proposed mitigating action to perform in response to a detected cyber intrusion.

FIG. 2

**Description**

**FIELD OF THE INVENTION**

The present disclosure relates to intrusion response systems for responding to cyber intrusions.

**BACKGROUND**

Numerous intrusion detection systems (IDSs) have been developed to detect cyberattacks against computer systems, and some of these IDSs have focused on identifying suspicious but non-malicious activity (false positives) or activity that is not representative of a successful attack (non-relevant positives) in real time. Taking inappropriate actions or failing to take appropriate actions to mitigate these cyberattacks can have a significant cost and can be extremely damaging. A key challenge is to respond at the right time, with appropriate actions that help to mitigate the attack and return the system to computer normal operation. One such system for network intrusion, which has been in use for several decades and is being rapidly improved with the availability of new technologies and advancements in computing power, is Intrusion Response Systems (IRSs).

IRSs mitigate the effects of intrusions by deploying appropriate actions. Action selection within IRSs generally uses expert knowledge (knowledge driven approach) or analysis of previously deployed actions (data driven approach). However, both approaches have limitations that might result in the selection of inappropriate actions. There is a need for improved IRSs that consider the suitability of proposed actions before these actions are implemented.

**SUMMARY OF THE INVENTION**

According to a first aspect, there is provided an intrusion response system comprising an action verification module configured to: receive an identifier associated with at least one proposed mitigating action to perform in response to a detected cyber intrusion and details of the detected cyber intrusion; identify one or more verification tests to be performed; perform each of the one or more verification tests to obtain a respective one or more verification outcomes; calculate a verification score associated with the at least one proposed mitigating action based on the respective one or more verification outcomes; and determine whether the verification score exceeds a predetermined threshold value.

While considerable research has focused on detecting and responding to cyberattacks, this research has not fully considered verification of the selected action before deploying. Deploying inappropriate actions can lead to unnecessary damage. The intrusion response system of the first aspect performs action verification for actions selected by the IRS. This action verification ensures that actions are feasible and that the selected actions are appropriate for the incident being responded to. The action verification process is especially useful as intrusion response systems become more automated and human verification becomes impractical. In addition, action verification can be particularly effective when combined with data-driven IRSs, as these systems do not follow predetermined rules and may potentially be more susceptible to suggesting inappropriate/infeasible response actions.

The identifier may be any label that allows for identification of the proposed mitigating action, e.g. a name or a key associated with the proposed mitigating action.

The verification tests may be selected from a database, bank or set of verification tests (e.g. created by security experts) using a lookup function or similar.

The predetermined threshold value could be an absolute value, or it may alternatively be a ratio/proportion of a maximum achievable score associated with the identified tests.

The intrusion response system may further comprise an action selection module configured to determine the at least one proposed mitigating action to perform in response to the detected cyber intrusion.

The intrusion response system may additionally/alternatively comprise an action execution module configured to perform the at least one proposed mitigating action responsive to the action verification determining that the verification score exceeds the predetermined threshold value.

Optionally, the action verification module may be configured to calculate a plurality of verification scores associated with a respective plurality of mitigating actions and determine a set of verified actions having respective verification scores that exceed respective predetermined threshold values. The action execution module may be configured to perform mitigating actions from the set of verified actions in order from highest to lowest verification score. That is, the verified actions may optionally be ranked based on their respective verification scores, and actions having higher verification scores may be performed before actions having lower verification scores. Performing the verified actions in order based on the verification score ensures that actions likely to be most effective are performed first.

The action verification module may optionally identify the one or more verification tests based on the identifier and/or details of the detected cyber intrusion. The details of the detected cyber intrusion may include one or more of an attack type (such as DDoS etc.), details of whether the attack affects confidentiality, integrity and/or availability, host information (e.g., open ports, services running, data stored, etc.) and host importance. The details could be provided by an IDS or by another system (e.g. by retrieving information from a database or similar).

Each verification outcome may represent whether the respective test is successful (e.g. a success or failure outcome). Alternatively, one or more verification tests may result in a numerical outcome (e.g. a score or some other value).

Optionally, each test may have an associating weight value, and the action verification module may calculate the verification score combining (e.g. summing or multiplying) weight values of the successful verification tests.

According to a second aspect of the invention, there is provided a computer-implemented method of verifying a proposed mitigating action to perform in response to a detected cyber intrusion, the method comprising, at an intrusion response system: receiving an identifier associated with the proposed mitigating action and details of the detected cyber intrusion; identifying one or more verification tests to be performed; performing each of the one or more verification tests to obtain a respective one or more verification outcomes; calculating a verification score based on the respective one or more verification outcomes; and determining whether the verification score exceeds a predetermined threshold value.

The second aspect of the invention shares the benefits of the first aspect of the invention.

The method of the second aspect may further comprise performing the proposed action only if it is determined that the verification score exceeds the predetermined threshold (i.e. the proposed mitigating action is not performed unless the threshold value is exceeded). Additionally/alternatively, the identifier of the proposed mitigating action may be provided to an action execution module of an intrusion response system.

Optionally, the verification score may be a first verification score and the proposed mitigating action may be a first proposed mitigating action and the method may further comprise: receiving another identifier associated with a second proposed mitigating action; identifying one or more further verification tests to be performed; performing each of the one or more further verification tests to obtain a respective one or more further verification outcomes; calculating a second verification score based on the respective one or more further verification outcomes; determining that the second verification score exceeds the first verification score; and, in response to determining that the second verification score exceeds the first verification score, performing the second proposed mitigating action before performing the first proposed mitigating action. That is, the verified actions may optionally be ranked based on their respective verification scores, and actions having higher verification scores may be performed before actions having lower verification scores. Performing the verified actions in order based on the verification score ensures that actions likely to be most effective are performed first.

Optionally, the one or more verification tests may be identified based on the identifier and/or details of the detected cyber intrusion. The details of the detected cyber intrusion may include one or more of an attack type (such as DDoS etc.), details of whether the attack affects CIA, host information (e.g., open ports, services running, data stored, etc.) and host importance. The details could be provided by an IDS or by another system (e.g. by retrieving information from a database or similar).

Each verification outcome may represent whether the respective test is successful (e.g. a success or failure outcome). Alternatively, one or more verification tests may result in a numerical outcome (e.g. a score or some other value).

Optionally, wherein each test may have an associating weight value, and calculating a verification score may comprise combining (e.g. summing or multiplying) weight values of successful verification tests.

According to a third aspect of the invention, there is provided a data processing apparatus comprising a processor configured to perform the method of the second aspect.

According to a fourth aspect of the invention, there is provided a computer program comprising instructions which, when executed by a computer, cause the computer to carry out the steps of the second aspect.

According to a fifth aspect of the invention, there is provided a computer readable carrier medium comprising the computer program of the fourth aspect.

## BRIEF DESCRIPTION OF THE FIGURES

Aspects of the present disclosure will now be described by way of example with reference to the accompanying figures, in which:

Figure 1 is a schematic of an exemplary data processing apparatus;
Figure 2 is a schematic of an intrusion response system; and
Figure 3 illustrates the steps of an action verification method performed by an intrusion response system.

## DETAILED DESCRIPTION

A properly designed and deployed intrusion detection system (IDS) can help block intruders and detect intrusions that can be resolved rapidly by an intrusion response system (IRS). IRSs can be categorized into two groups based on the response type: active IRSs and passive IRSs. A passive IRS aims to notify and alert other parties to the occurrence of an intrusion and is dependent on these parties to take further actions. An active IRS automatically generates an action, without human involvement, to reduce the effects of the intrusion. Active IRSs can be built on knowledge driven or data driven approaches. A knowledge driven approach (KDA) provides collective wisdom from historical experiences, whereas data driven approaches (DDA) provide inference or predictions for tackling specific issues based on the provided (issue-specific) data. The responses selected by both techniques are not completely reliable because knowledge driven approaches are fully dependent on expert knowledge and therefore limited to human experience, and data driven approaches are completely dependent on the data, which might be incomplete or inadequate. Once an action is selected by either approach it should therefore be verified by a supplementary means before deploying. The present invention provides an IRS action verification method based on a test-driven approach.

The definitions several of common terms used herein are described below:

- *Incident*: any adverse event whereby some aspect of host/environment security could be threatened, e.g. loss of data confidentiality, disruption of data or system integrity or denial of service. Incidents can be sub-categorized as alerts or attacks (intrusion).

- *Intrusion/attack*: any unauthorized activity on a computer network, host or environment that causes interruption to a service or reduction in the quality of a service. For example, when an intruder penetrates the security of a system.

- *Alerts:* notifications of events that may signify the presence of an attack or indication of future attacks.

- *Response:* a plan for handling an incident methodically. If an incident is nefarious, steps are taken to quickly contain the attack and learn from the incident.

- *Action:* any activity taken to respond to an incident. May also be referred to as a mitigating action.

- *Cybersecurity:* the ability of network and information systems to resist activity that compromises the availability, authenticity, integrity or confidentiality of digital data or the services those systems provide.

- *Network and information system:* an electronic communications network, or any device or group of interconnected devices which either process, store, retrieve or transmit digital data.

- *Incident response:* a structured process to identify and mitigate cybersecurity incidents.

Most IRSs select actions to detected attacks based on an attack-response cost, a risk-based assessment and/or a knowledge-based process. This helps to select appropriate actions based on the cost and effectiveness and prevents simultaneous deployment of an excessive number of actions.

The present invention provides an action verification process for checking a selected action is appropriate for the detected attack. The objective of the action verification process is to check the action-attack mapping across all aspects. This process includes checking that actions can resolve the attack (or at least mitigate against the effects of the attack) and evaluating action deployment cost in terms of time and computing power. Unlike a standard IRS, the action verification process does not concentrate on proving the correctness of an action. Instead, it verifies whether a selected action has the functionality to resolve the attack and is suitable of deployment. For example, if an attack is affecting the availability of a host among confidentiality, integrity, and availability (CIA) factors, the action verification process may check whether the selected action resolves host availability issues and can be deployed on the host, considering various criteria like the deployment complexity on the attacked host. In a real-world scenario, if an IDS detects an attack on an edge node and the selected response is to block a URL, the action verification may check whether the blocked URL can resolve the specific CIA factor issue and analyse how frequently users access this URL. If the URL has never been accessed, then there is a high probability that it can be blocked without having significant adverse effects on availability, but if the URL is accessed frequently then blocking it may not be an appropriate course of action.

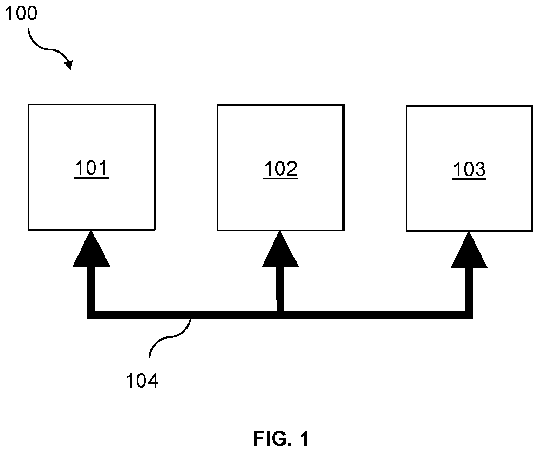

Figure 1 schematically illustrates an example of a data processing apparatus capable of performing any of the methods described herein. It comprises a processor 101 operably coupled to both a memory 102 and an interface (I/O) 103 via a bus 104.

The memory 102 may optionally comprise computer program instructions which, when the program is executed by the processor 101, cause the data processing apparatus 100 to carry out any of the methods described herein. Alternatively or additionally, the interface 103 can optionally comprise one or both of a physical interface configured to receive a data carrier having such instructions stored thereon and a receiver configured to receive a data carrier signal carrying such instructions.

The receiver, when present, can be configured to receive messages. It can comprise one or more wireless receiver modules and/or one or more wired receiver modules. The interface 103 can optionally comprise a transmitter configured to transmit messages. The transmitter, when present, can comprise one or more wireless transmitter modules and/or one or more wired transmitter modules.

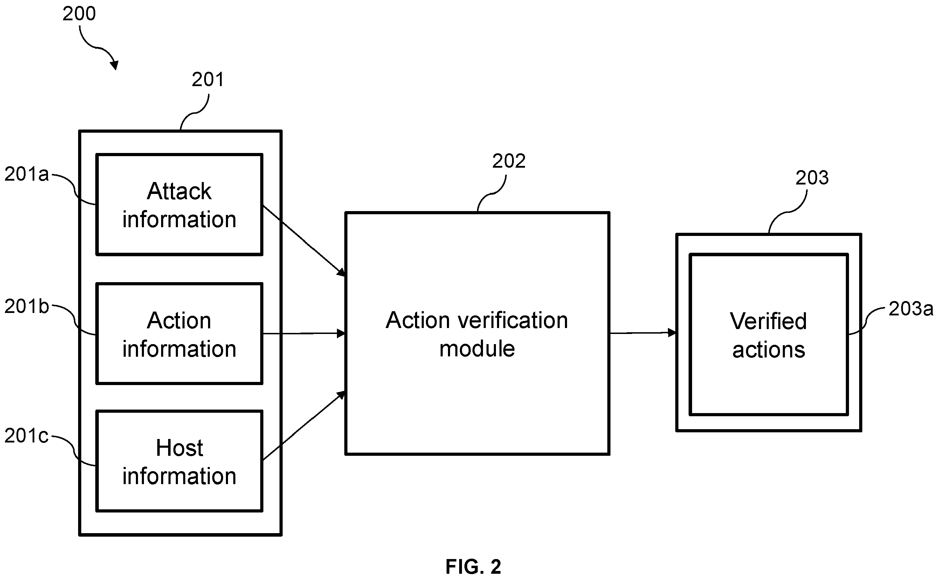

An example IRS architecture 200 is shown in Figure 2. An action verification module 202 receives information such as attack information 201a, action information 201b, and host information 201c, which may optionally be supplied by an action selection module 201 of the IRS 200, or by an alternative source, such as by an IDS, by another component of the IRS and/or by a security expert. The action verification module 202 proceeds to analyse factors including attack information, action information, host information, action deployment complexity and host accessibility.

Attack information 201a and action information 201b are used to infer the effect on confidentiality, integrity and availability. Confidentiality is concerned with preventing unauthorized access to sensitive information. Integrity is concerned with preventing modification of information outside defined policies. Availability is concerned with ensuring that a system's authorized users have timely and uninterrupted access. Examples of CIA weight values for various attacks are presented in Table I.

*Table I: attack severity based on CIA*

| Attack | $W_C$ | $W_I$ | $W_A$ |
|---|---|---|---|
| DDoS | 0 | 0 | 3 |
| Brute force | 2 | 1 | 0 |
| Ping scan | 1 | 1 | 2 |

Host information 201c may be used to infer the number of ports available, host location, how many other nodes are connected to the host, what type of data is on the host, which services are provided by the host, etc.

Action deployment complexity is a factor that defines what is needed to execute the action. For example, how much computing power is needed to execute the action on the host, how much time is required to execute the action, etc. Various numeric values are given for each deployment complexity.

Host accessibility is the factor that defines the permission to access/open/execute any file/directory. One example of this is Linux permission settings for a file, in which there are three groups (user, group and other) that make up the permissions, represented by three characters for each group, namely r: read, w: write, x: execute and -: none (e.g. rwxr-xr-x represents read, write and execute permissions for the user, and read and execute permissions for group and other).

A set of verification tests may be created before deployment of the IRS. For example, these tests may be written by a cybersecurity expert, or they may be generated using machine learning techniques. In addition, the set may be dynamic and evolve over time, e.g. in response to new types of cyber attack.

The verification test set can potentially include a large number of tests, so selecting fewer test cases that detect the greatest number of mappings between actions and attacks allows for more efficient action verification. This is usually achieved by sampling the attack and host information to evaluate the action with representative test cases only. Therefore, a test set is preferably generated for each attack, action and host type. Based on the attack, specific tests can be executed for the selected actions.

Once the verification tests have been performed, the action verification module 202 outputs a list 203a one or more verified actions to an action execution module 203, which can then perform the verified actions as required.

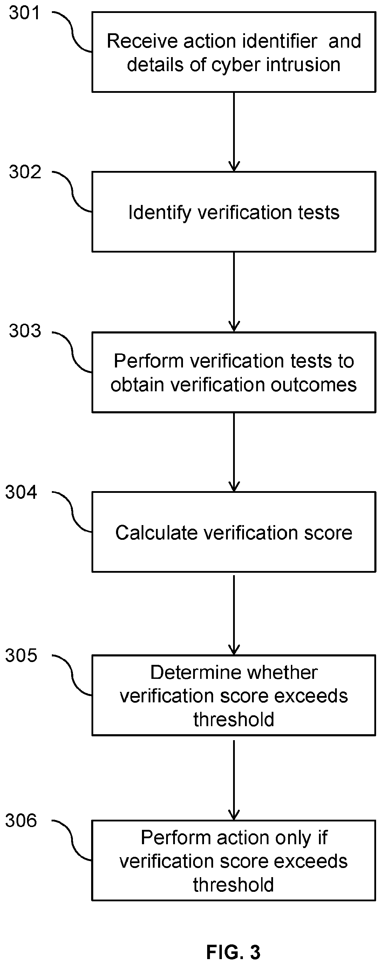

Figure 3 illustrates an example of a process that can be performed by the action verification module 202 to verify the selected actions for the detected attacks.

Detected attacks may be resolved with one or more actions, and each attack can have more than one action selected by the action selection module of the IRS. At step 301, the action verification module 202 receives an identifier associated with at least one proposed mitigating action and details of the detected cyber intrusion. The identifier could be in any form that allows for identification of the proposed mitigating action, e.g. a name, hash or key associated with the action. The details of the detected cyber intrusion may include an attack type (e.g. DDoS etc.) and/or details of how the cyber intrusion affects confidentiality, integrity of availability of the host/system. The action verification module may also receive host information and/or host importance (e.g. e.g., open ports, services running, data stored, etc.), which may optionally be inferred by querying the host device and/or retrieving the information from a centralised device database.

To verify that an action is appropriate for an attack, one or more verification tests is executed. These verification tests are identified in step 302. The selection of tests for possible actions may depend upon factors such as the specified requirements of the detected attack and host importance. For example, the tests may be identified based on the identifier of the proposed action, the details of the detected cyber intrusion and/or host importance. One skilled in the art will appreciate that there are numerous ways this information could be used to identify tests, e.g. using lookup tables.

Verification tests may optionally be divided into different groups representative of the importance of each test to the verification of the action, e.g. low (L), medium (M) and high (H) groups. For example, a test in the high group may verify with more certainty that the attack-action pair is correct, whereas test in the low group may have more uncertainty. Different weights/scores may be applied to tests in each group. For example, tests in the low group may be weighted 1, tests in the medium group may be weighted 3, and tests in the high group may be weighted 5. It should be understood that alternative values for scores/weightings could also be used, and that more, fewer or no importance groups could be used.

The importance may be based on an action-attack-host importance triplet and how likely each test is to verify the action as appropriate for the attack. As an example, a test for the action of rerouting traffic to a sink is of high importance to a DDoS attack but is of low importance to a brute force attack. Similarly, a test for the action of blocking a URL is of potentially greater importance to a malware attack than a DDoS attack. Furthermore, host importance is also a factor in verifying an action and attack, e.g., for a malware attack, the action of collecting logs from a server is of greater importance than collecting logs on a standard personal computer. These categorisations may be set by security experts upon creation of the tests.

Attack and host information may be used to inform the selection of tests in each test group. The host information may be used to calculate a host rank and assign an importance to the host. For example, host importance may optionally be grouped into three categories: hosts with rank 1 are of high importance, hosts with rank 2 are of medium importance and hosts with rank 3 are of low importance. The ranges for host groups may be manually determined, or an algorithm (such as a machine learning algorithm) may be used to assign host importance values. An example equation for calculating host importance is:

$$Host_{importance} = \sum_{i=1}^{l} w_{Port_i} * N_{Port_i} + \sum_{j=1}^{m} w_{Data_j} * N_{Data_j} + \sum_{k=1}^{n} w_{Service_k} * N_{Service_k} + Host_{connections} + Host_{location} \quad (1)$$

where the variables may be defined as follows:

- $l$ is the number of different types of ports open on a host. For example, if a host has two types of ports, one for an IMAP mail server and another for an SSH server, then $l$ = 2.

- $Port_i$ represents the type of port associated with value $i$. For example, in relation to the above-mentioned value of $l$, $Port_1$ would represent the IMAP mail server port and $Port_2$ would represent the SSH server port.

- $w_{Port_i}$ is a numeric value that represents the weight of each port type ($Port_i$). For example, $w_{Port_1}$ may be 0.6 and $w_{Port_2}$ may be 0.7. Example values for $w_{Port_i}$ are given in Table II.

*Table II: example port type weights ($w_{Port_i}$)*

| Port Type | Weight |
|---|---|
| FTP server | 0.5 |
| SSH server | 0.7 |
| IMAP mail server | 0.6 |
| MQTT | 0.7 |

- $N_{Port_i}$ is a numeric value that represents the number of the same port types ($Port_i$) running on a host. For example, if a host has only one mail server running on port 143, then $N_{Port_1}$ = 1. However, if the host has an IMAP mail server running on port 143 and another IMAP mail server running on 187, then $N_{Port_1}$ = 2.

- $m$ is the number of different types (or classifications) of data available on a host. For example, if a host has two types of data, private and public type, then $m$ = 2.

- $Data_j$ represents the type (or classification) of data associated with value $j$. For example, in relation to the aforementioned value of $m$, $Data_1$ will be private data and $Data_2$ will be public data.

- $w_{Data_j}$ is a numeric value that represents the weight of each data type ($Data_j$). For example, $w_{Data_1}$ might be 0.7 and $w_{Data_2}$ might be 0.3. Example values for $w_{Data_j}$ are given in Table III.

*Table III: example data type weights ($w_{Data_j}$)*

| Data Type | Description | Weight |
|---|---|---|
| Sensitive | Data that has the most restricted access and requires a high degree of integrity. | 1 |
| Confidential | Data that might cause damage to the company, if disclosed. | 0.9 |
| Private | Data that might not damage the company but must be kept secured for other reasons. | 0.7 |
| Proprietary | Data that contains information, which when disclosed could reduce the company's competitive advantage. | 0.5 |
| Public | Data that is the least sensitive and would cause the least harm to the company, if disclosed. | 0.3 |

- $N_{Data_j}$ is a numeric value that represents the number of same data types ($Data_j$) on a host. For example, if a host has only one catalogue of private data regarding finance, then $N_{Data_1} = 1$. However, if a host has two catalogues of private data, one regarding finance and another regarding customers information, then $N_{Data_1} = 2$.

- $n$ is the number of different types of services available on a host. For example, if a host provides two types of service, one for mail and another for a database, then $n = 2$.

- $Service_k$ represents the particular type of service associated with value $k$. For example, in relation to the aforementioned value of $n$, $Service_1$ will represent the mail service and $Service_2$ will represent a database.

- $w_{Service_k}$ is a numeric value that represents the weight of each service type ($Service_k$). For example, $w_{Service_1}$ may be 0.6 and $w_{Service_2}$ may be 1. Example values for $w_{Service_k}$ are given in Table IV.

*Table IV: example service type weights*

*($w_{Service_k}$)*

| Description | Weight |
|---|---|
| Database | 1 |
| Mail | 0.6 |
| Web | 0.5 |
| Storage | 0.6 |

- $N_{Service_k}$ is a numeric value that represents the number of same port types ($Service_k$) running on a host. For example, if a host has only one mail service running on it, then $N_{Service_1} = 1$. However, if a host has two mail services (e.g. company and university), then $N_{Service_1} = 2$.

- $Host_{connections}$ is a numeric value that represents the number of other hosts connected to this host. For example, if a host is connected to a temperature sensor and a humidity sensor then $Host_{connections} = 2$.

- $Host_{location}$ is a numeric value that represents the importance of a host's location. For example, if the host is in a server room, it may be assigned a value of 3, whereas if the host is in a lobby then it may be assigned a value of 1. The greater the value, the more important the location is considered to be.

Table V presents examples of notional test selection in various groups based on attack information and host rank.

*Table V: example relationship between attack, host importance and test groups*

| Incident (Attack) | Host Rank | Test Group: High | Test Group: Medium | Test Group: Low |
|---|---|---|---|---|
| 11 | 1 | Tests 1,5,7 | Tests 2,3 | Tests 4,11 |
| 13 | 2 | Tests 1,2,7 | Tests 5,4 | Tests 3,11 |
| 15 | 1 | Tests 3,4,9 | Tests 1,15 | Tests 10,12 |
| 17 | 2 | Tests 2,5,9 | Tests 1,3,4,7 | Tests 6,13,15 |

Verification tests may be created (e.g. by a cybersecurity expert) for each attack and action to verify if the action is appropriate. For example, for a brute force attack, if the action is to notify a system administrator about the current attack, one of the verification tests might be to check if there is sufficient memory to carry out this action. An action verification cross reference matrix can be generated for each informed attack based on expert knowledge. The action information and action deployment complexity influence the test results. Using the verification cross reference matrix and the value of each test, selected actions are scored.

For example, in incident 15 four actions may have been selected by the IRS: A1, A3, A7 and A9. To verify those actions for the attack on the host, the appropriate verification tests selected by the expert to verify these actions might be tests 1, 7, 9, 15 and 22 (these test numbers have been chosen arbitrarily - tests may optionally be numbered, or an alternative labelling system may be used). Each test is performed in step 303 to obtain respective verification outcomes (i.e. success or failure) as shown in Table VI.

*Table VI: example of action verification cross reference matrix for incident 15*

| Action | Test 1 (H) | Test 7 (M) | Test 9 (L) | Test 15 (H) | Test 22 (H) | Score |
|---|---|---|---|---|---|---|
| A1 | ✓ | | ✓ | ✓ | | 11 |
| A3 | ✓ | ✓ | ✓ | | | 9 |
| A7 | ✓ | ✓ | | | ✓ | 13 |
| A9 | ✓ | | | ✓ | ✓ | 15 |

A verification score is then calculated in step 304 based on the outcomes. In the present example, tests 1, 15 and 22 belong to the "high" importance group, test 7 belongs to the "medium" importance group and test 9 belongs to the "low" importance group. The total score for each action may be calculated using these importance ratings (based on the above example of a high, medium and low group tests having scores of 5, 3 and 1 respectively). It should be understood that the test importance ratings are optional, and all tests may alternatively be given the same weighting. It should be further understood that different scores could be used for high, medium and low importance tests as appropriate, and that additional/fewer importance ratings could be used (e.g. only high and low).

In step 305 the verification score is compared to a predetermined threshold value to determine whether it exceeds the threshold value. The threshold value may be an absolute score, or it may be a predetermined proportion of a maximum possible score associated with that action. In addition, a different threshold value may be associated with each action (for example, some tests may not be relevant to some actions, in which case the threshold value may be lower to reflect that the maximum possible score for that action is lower).

Actions that have a score above the verification threshold value are considered to be verified actions for the detected attack, and these actions may be performed in step 306 (e.g. by the action execution module 203). For example, if the threshold value is 10, then out of the four selected actions in Table VI only three actions are verified to be considered for the response (A1, A7 and A9).

As previously explained, the values that are needed to verify an action for a detected attack may include one or more of attack, action and host information, action deployment complexity and host accessibility. Examples of such information include:

- Attack information:

  ◦ CIA weightage for the detected attack.

- Action information:

  ◦ CIA weightage for the selected action.

- Host information:

  ◦ Type and number of accessible ports on the host.

  ◦ Type and number of available services on the host.

  ◦ Type and number of available data on the host.

  ◦ Weightage for each type of port, data and services.

  ◦ Number of other connected nodes.

◦ Location of the host.

- Action deployment complexity:

  ◦ Tests to check the deployment complexity of the selected actions.

- Host accessibility:

  ◦ File/directory permissions that are known.

  ◦ Tests to check the permissions.

Examples values for attack, action and host information are provided in Table VII, Table VIII and Table IX. Examples of test sets for the action deployment complexity and host accessibility are listed in Table X.

*Table VII: example attack information*

| $W_C$ | $W_I$ | $W_A$ |
|-------|-------|-------|
| 1 | 1 | 0 |

*Table VIII: example action information*

| Action | $W_C$ | $W_I$ | $W_A$ |
|--------|-------|-------|-------|
| A1 | 1 | 1 | 0 |
| A2 | 1 | 1 | 1 |
| A3 | 1 | 1 | 0 |
| A4 | 1 | 0 | 1 |
| A5 | 0 | 1 | 1 |

*Table IX: example host information*

| Ports | Services | Data | Connections | Location |
|-------|----------|------|-------------|----------|
| *SSH server* *IMAP server* *HTTP* | *Database* *Mail* *Web* | *Private* *Public* | 3 | *Office* |

*Table X: example action verification tests*

| Test ID | Description |
|---------|-------------|
| Test1 | Check action resolves CI (confidentiality and integrity) issues |
| Test2 | Check host has root access |
| Test3 | Check port is not relied on by many services |
| Test4 | Check sufficient memory to execute the action |
| Test5 | Time to execute the action < attacks threshold time |
| Test6 | Copying data to another location is possible |
| Test7 | Attacked host has a clone |

For example, if the detected attack is a brute force attack on the host, the five actions that are selected for this attack may be:

A1 - disconnect the attacked host

A2 - block the port being used for the attack

A3 - redirect traffic

A4 - send notification to an admin

A5 - record the attack details

As mentioned previously, attack and host information may influence the selection of the tests in various test groups. Table XI is generated based on the example information from Tables VIII, IX and IX.

*Table XI: example action verification test outcomes*

| Action | Test1(H) | Test2 (H) | Test3 (M) | Test4 (H) | Test5 (H) | Test6 (M) | Test7 (M) | Score |
|--------|----------|-----------|-----------|-----------|-----------|-----------|-----------|-------|
| A1 | ✓ | | | | ✓ | | ✓ | 13 |
| A2 | ✓ | ✓ | ✓ | | ✓ | | | 18 |
| A3 | ✓ | ✓ | | | ✓ | | ✓ | 23 |
| A4 | | | | ✓ | ✓ | | | 10 |
| A5 | ✓ | ✓ | | ✓ | ✓ | | | 15 |

Implementing action verification provides a verification score for each selected action. Based on the scores in Table XII, the highest-scoring action is A3, to redirect the traffic, and the lowest-scoring action is A4, send notification to admin. If the verification threshold value is set to 15 by (e.g. a security expert), then the selected verified actions are A2 (block the port), A3 (redirect traffic) and A5 (record the attack details). In some scenarios, the best action for the informed attack may be the one with the highest action verification score. The method may therefore optionally involve performing the action with the highest score first, which for the given scenario is action A3.

The preceding description is presented to enable any person skilled in the art to make and use the system and/or perform the method of the invention and is provided in the context of a particular application. Various modifications to the disclosed examples will be readily apparent to those skilled in the art. It is intended that the specification be considered as exemplary only.

Where this specification lists one or more method steps, the presence of precursor, follow-on and intervening method steps is not excluded unless such exclusion is explicitly indicated. Similarly, where this specification lists one or more components of a device or system, the presence of additional components, whether separate or intervening, is not excluded unless such exclusion is explicitly indicated.

In addition, where this specification has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claims. That is, the operations/steps may be performed in any technically feasible order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein. Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation, microphones, buttons, keypads, touchscreens, touchpads, trackballs, joysticks, mice, gesture control devices and brain control (e.g. electroencephalography, EEG) devices. User output devices can include, without limitation, speakers, buzzers, display screens, projectors, indicator lights, haptic feedback devices and refreshable braille displays. User interface devices can comprise one or more user input devices, one or more user output devices, or both.

**Claims**

1. An intrusion response system comprising an action verification module configured to:

   receive an identifier associated with at least one proposed mitigating action to perform in response to a detected cyber intrusion and details of the detected cyber intrusion;
   identify one or more verification tests to be performed;
   perform each of the one or more verification tests to obtain a respective one or more verification outcomes;
   calculate a verification score associated with the at least one proposed mitigating action based on the respective one or more verification outcomes; and
   determine whether the verification score exceeds a predetermined threshold value.

2. The intrusion response system of claim 1, further comprising an action selection module configured to determine the at least one proposed mitigating action to perform in response to the detected cyber intrusion.

3. The intrusion response system of claim 1 or claim 2, further comprising an action execution module configured to perform the at least one proposed mitigating action responsive to the action verification determining that the verification score exceeds the predetermined threshold value.

4. The intrusion response system of claim 3, wherein the action verification module is configured to calculate a plurality of verification scores associated with a respective plurality of mitigating actions and determine a set of verified actions having respective verification scores that exceed respective predetermined threshold values; and

wherein the action execution module is configured to perform mitigating actions from the set of verified actions in order from highest to lowest verification score.

5. The intrusion response system any preceding claim, wherein the action verification module identifies the one or more verification tests based on the identifier and/or details of the detected cyber intrusion.

6. The intrusion response system of any preceding claim, wherein each test has an associating weight value, and wherein the action verification module calculates the verification score combining weight values of successful verification tests.

7. A computer-implemented method of verifying a proposed mitigating action to perform in response to a detected cyber intrusion, the method comprising, at an intrusion response system:

   receiving an identifier associated with the proposed mitigating action and details of the detected cyber intrusion;
   identifying one or more verification tests to be performed;
   performing each of the one or more verification tests to obtain a respective one or more verification outcomes;
   calculating a verification score based on the respective one or more verification outcomes; and
   determining whether the verification score exceeds a predetermined threshold value.

8. The method of claim 7, further comprising performing the proposed action only if it is determined that the verification score exceeds the predetermined threshold.

9. The method of claim 7 or claim 8, wherein the verification score is a first verification score and the proposed mitigating action is a first proposed mitigating action, and wherein the method further comprises:

   receiving another identifier associated with a second proposed mitigating action;
   identifying one or more further verification tests to be performed;
   performing each of the one or more further verification tests to obtain a respective one or more further verification outcomes;
   calculating a second verification score based on the respective one or more further verification outcomes;
   determining that the second verification score exceeds the first verification score; and,
   in response to determining that the second verification score exceeds the first verification score, performing the second proposed mitigating action before performing the first proposed mitigating action.

10. The method of any of claims 7 to 9, wherein the one or more verification tests are identified based on the identifier and/or details of the detected cyber intrusion.

11. The method of any of claims 7 to 11, wherein each test has an associating weight value, and wherein calculating a verification score comprises combining weight values of successful verification tests.

12. The intrusion response system or method of any preceding claim, wherein each verification outcome represents whether the respective test is successful.

13. A data processing apparatus comprising a processor configured to perform the method of any of claims 7 to 12.

14. A computer program comprising instructions which, when executed by a computer, cause the computer to carry out the steps of any of claims 7 to 12.

15. A computer readable carrier medium comprising the computer program of claim 14.

100

101

102

103

104

**FIG. 1**

**FIG. 2**

301 — Receive action identifier and details of cyber intrusion

302 — Identify verification tests

303 — Perform verification tests to obtain verification outcomes

304 — Calculate verification score

305 — Determine whether verification score exceeds threshold

306 — Perform action only if verification score exceeds threshold

FIG. 3

## EUROPEAN SEARCH REPORT

Application Number

EP 22 20 5504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 470 106 B1 (LIN WAH-KWAN [US] ET AL) 11 October 2022 (2022-10-11)<br>* column 1, line 9 - line 10 *<br>* column 1, line 27 - line 44 *<br>* column 1, line 64 - line 67 *<br>* column 3, line 15 *<br>* column 4, line 29 - line 33 *<br>* column 4, line 39 - line 44 *<br>* column 4, line 54 - column 5, line 8 *<br>* column 7, line 59 - column 8, line 44 *<br>* column 8, line 52 - line 67 *<br>* column 9, line 10 - line 34 *<br>* column 10, line 42 - line 44 *<br>* column 11, line 66 - column 12, line 24 *<br>* column 15, line 12 - line 17 *<br>* column 18, line 13 - line 48 *<br>* column 22, line 4 - line 26 *<br>* column 22, line 44 - column 23, line 23 *<br>* figures 2, 11 *<br>----- | 1-15 | INV.<br>H04L9/40 |
| | | | TECHNICAL FIELDS SEARCHED (IPC) |
| | -/-- | | H04L |

The present search report has been drawn up for all claims

| Place of search | Date of completion of the search | Examiner |
|---|---|---|
| Munich | 13 April 2023 | Bharucha, Zubin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 22 20 5504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 225 407 B1 (THROWER WOODROW A [US] ET AL) 17 July 2012 (2012-07-17)<br>* abstract *<br>* column 1, line 8 – line 10 *<br>* column 1, line 40 *<br>* column 2, line 2 *<br>* column 2, line 11 – line 23 *<br>* column 2, line 29 – line 39 *<br>* column 4, line 27 – line 47 *<br>* column 4, line 55 – line 59 *<br>* column 5, line 5 – line 9 *<br>* column 5, line 20 – line 27 *<br>* column 11, line 19 – line 23 *<br>* column 11, line 28 – line 39 *<br>* column 11, line 43 – line 44 *<br>* column 11, line 56 – line 59 *<br>* column 12, line 1 – line 3 *<br>* column 12, line 7 – line 10 *<br>* figures 1, 2, 10 *<br>_____ | 1-15 | |
| A | US 2019/124106 A1 (NAVARRO ISMAEL [US]) 25 April 2019 (2019-04-25)<br>* paragraph [0001] *<br>* paragraph [0010] – paragraph [0011] *<br>* paragraph [0029] – paragraph [0032] *<br>* paragraph [0035] – paragraph [0036] *<br>* paragraph [0041] *<br>* paragraph [0047] *<br>* paragraph [0049] *<br>_____ | 1-15 | TECHNICAL FIELDS SEARCHED (IPC) |

The present search report has been drawn up for all claims

| Place of search | Date of completion of the search | Examiner |
|---|---|---|
| Munich | 13 April 2023 | Bharucha, Zubin |

EPO FORM 1503 03.82 (P04C01)

**ANNEX TO THE EUROPEAN SEARCH REPORT
ON EUROPEAN PATENT APPLICATION NO.**

EP 22 20 5504

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2023

| Patent document cited in search report | | Publication date | Patent family member(s) | | Publication date |
|---|---|---|---|---|---|
| US 11470106 | B1 | 11-10-2022 | NONE | | |
| US 8225407 | B1 | 17-07-2012 | NONE | | |
| US 2019124106 | A1 | 25-04-2019 | US | 2019124106 A1 | 25-04-2019 |
| | | | WO | 2019079359 A1 | 25-04-2019 |

EPO FORM P0459

For more details about this annex : see Official Journal of the European Patent Office, No. 12/82